# EUROPEAN PATENT APPLICATION

(11) **EP 3 549 712 A1**
(43) Date of publication of application: **09.10.2019**
(21) Application number: 17875246.5
(22) Date of filing: 31.10.2017
(51) Int. Cl.: B23K 26/359, B23K 26/00, G03H 1/04

(54) **METHOD FOR MANUFACTURING TRANSFER MOLD ROLL HAVING FINE PERIODIC STRUCTURE AND TRANSFER MOLD ROLL**

(30) Priority: 02.12.2016 JP 2016235226
(71) Applicant: Think Laboratory Co., Ltd., Kashiwa-shi Chiba 277-8525 (JP)
(72) Inventor: SHIGETA, Kaku, Kashiwa-shi Chiba 277-8525 (JP)
(74) Representative: Mincone, Antimo
(86) International application number: PCT/JP2017/039224
(87) International publication number: WO 2018/100952

(57) **Abstract**

Provided is a method of manufacturing a transfer molding roll having a fine periodic structure and a transfer molding roll, with which a continuous elongated pattern can be seamlessly formed on an object to be transferred, for example, a film. The method of manufacturing a transfer molding roll having a fine periodic structure includes: preparing a cylindrical metal base material (28); irradiating an outer circumferential surface (30) of the cylindrical metal base material with an ultrashort pulse laser; and forming a seamless circulating nano-periodic structure (34a, 34b, 34c) on the outer circumferential surface (30) of the cylindrical metal base material through irradiation of the ultrashort pulse laser to form a seamless circulating pattern (36, 38) configured to generate an optical interference color with the seamless circulating nano-periodic structure (34a, 34b, 34c).

## Description

### Technical Field

The present invention relates to a method of manufacturing a transfer molding roll having a fine periodic structure, and a transfer molding roll having a fine periodic structure.

### Background Art

When an elongated film is continuously subjected to embossing using a hologram or an optical interference color, there has hitherto been used an embossing roll, for example, an embossing cylinder.

Such an embossing roll is manufactured as described below. First, a hologram pattern is generated on a photosensitive film through use of a laser. Then, a master is created with a peeling layer formed by chemical plating and electrocasting. The created master is reproduced, and the reproduced masters are arrayed to obtain an original plate. The original plate is bonded to a roll. A method of manufacturing such a master is disclosed, for example, in Patent Document 1.

In the above-mentioned related-art method of manufacturing an original plate by reproducing the master, there has been a problem in that a joint is generated when the masters are reproduced and are arrayed. In a product transferred from the original plate, a joint portion cannot be used, and hence the yield is deteriorated. Further, in the related-art method, a continuous elongated pattern cannot be formed without a joint.

### Prior Art Document

### Patent Document

Patent Document 1: JP Hei 08-305264 A

### Disclosure of the Invention

### Problems to be solved by the Invention

The present invention has been made in view of the related-art problem, and an object of the present invention is to provide a method of manufacturing a transfer molding roll having a fine periodic structure and a transfer molding roll, with which a continuous elongated pattern can be seamlessly formed on an object to be transferred, for example, a film.

### Means for Solving Problems

In order to solve the above-mentioned problem, a method of manufacturing a transfer molding roll having a fine periodic structure according to the present invention includes: preparing a cylindrical metal base material; irradiating an outer circumferential surface of the cylindrical metal base material with an ultrashort pulse laser; and forming a seamless circulating nano-periodic structure on the outer circumferential surface of the cylindrical metal base material through irradiation of the ultrashort pulse laser to form a seamless circulating pattern configured to generate an optical interference color with the seamless circulating nano-periodic structure.

It is preferred that the ultrashort pulse laser be a femtosecond laser or a picosecond laser, and it is more preferred that the ultrashort pulse laser be a femtosecond laser.

It is preferred that the cylindrical metal base material have a rotation axis in a longitudinal direction of the cylindrical metal base material, and that the outer circumferential surface of the cylindrical metal base material be irradiated with the ultrashort pulse laser while the cylindrical metal base material is rotated about the rotation axis.

It is preferred that the ultrashort pulse laser be emitted from a fine processing device including: a circular wavelength plate arranged in parallel to the outer circumferential surface of the cylindrical metal base material; and a rotation controller configured to rotate the circular wavelength plate in a circumferential direction of the circular wavelength plate.

A transfer molding roll having a fine periodic structure according to the present invention includes a seamless circulating pattern configured to generate an optical interference color with a seamless circulating nano-periodic structure formed on an outer circumferential surface of a cylindrical metal base material.

### Advantageous Effects of the Invention

The present invention exhibits a significant effect of being able to provide the method of manufacturing a transfer molding roll having a fine periodic structure and the transfer molding roll, with which a continuous elongated pattern can be seamlessly formed on an object to be transferred, for example, a film.

### Brief Description of Drawings

FIG. 1 is a configuration diagram for illustrating a fine processing device for forming a fine periodic structure to be used in a method of manufacturing a transfer molding roll having a fine periodic structure of the present invention.
FIG. 2 is schematic views for illustrating pattern production examples based on a seamless circulating nano-periodic structure.
FIG. 3 is a partially enlarged photograph for showing a boundary of a nano-periodic structure in the case where different kinds of nano-periodic structures having different polarization directions are combined.
FIG. 4 is a photograph for showing a partial outer appearance of a transfer molding roll having a fine periodic structure obtained in Example 1.
FIG. 5 is a partially enlarged photograph for showing a seamless circulating nano-periodic structure formed on the transfer molding roll having a fine periodic structure obtained in Example 1.
FIG. 6 is a photograph for showing a partial outer appearance of a transfer molding roll having a fine periodic structure obtained in Example 2.

### Modes for Carrying out the Invention

Now, an embodiment of the present invention is described. However, the embodiment is described only for illustrative purposes, and needless to say, the embodiment can be modified without departing from the technical concept of the present invention. Like members are denoted by like reference symbols.

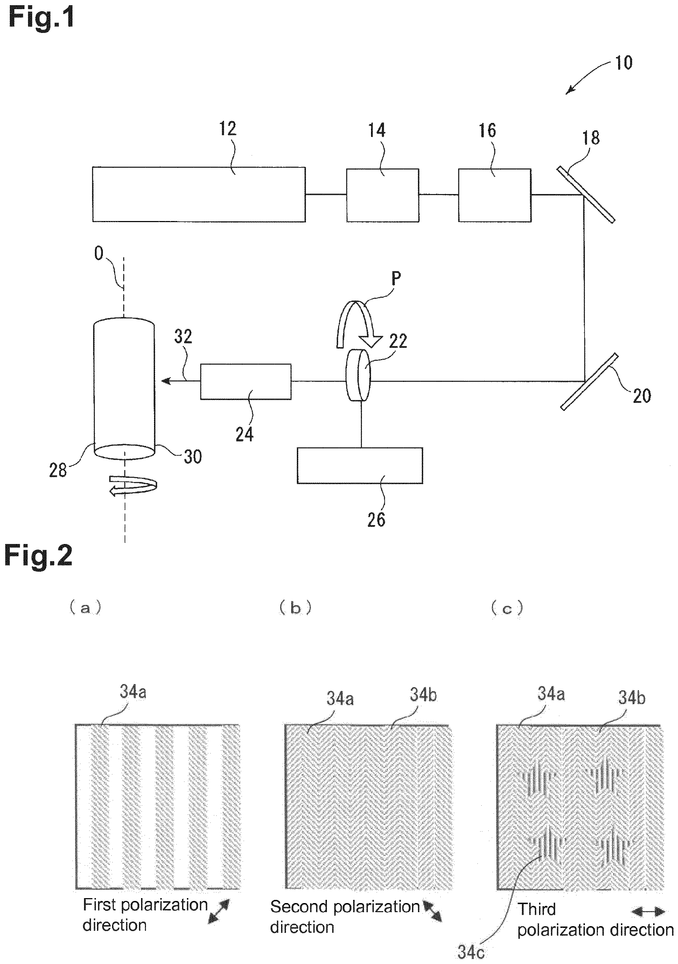

In FIG. 1, there is illustrated a fine processing device 10 for forming a fine periodic structure to be used in a method of manufacturing a transfer molding roll having a fine periodic structure of the present invention.

The fine processing device 10 includes an ultrashort pulse laser oscillator 12 configured to oscillate an ultrashort pulse laser. As the ultrashort pulse laser oscillator 12, any known ultrashort pulse laser oscillator can be used as long as the ultrashort pulse laser oscillator is configured to oscillate a femtosecond laser or a picosecond laser, which is an ultrashort pulse laser.

The fine processing device 10 further includes an optical wavelength converter 14, an optical attenuator 16, a first mirror 18, a second mirror 20, a wavelength plate 22, and an objective lens 24. Laser light oscillated from the ultrashort pulse laser oscillator 12 passes through the optical wavelength converter 14, the optical attenuator 16, the first mirror 18, and the second mirror 20, and is polarized by the wavelength plate 22. The polarized laser light passes through the objective lens 24, and an outer circumferential surface 30 of a cylindrical metal base material 28 is irradiated with an ultrashort pulse laser 32. As the optical wavelength converter 14, the optical attenuator 16, the first mirror 18, the second mirror 20, the wavelength plate 22, and the objective lens 24, those which are known can be employed.

The cylindrical metal base material 28 has a rotation axis O in a longitudinal direction thereof. It is preferred that the outer circumferential surface 30 of the cylindrical metal base material 28 be irradiated with the ultrashort pulse laser while the cylindrical metal base material 28 is rotated about the rotation axis O.

As a material for the cylindrical metal base material 28, it is only required that the surface be made of metal. Therefore, any known metals can be employed. It is preferred that the cylindrical metal base material 28 be made of, for example, at least one kind of material selected from the group consisting of Ni, stainless steel, brass, Fe, Cr, Zn, Sn, Ti, Cu, and Al. The cylindrical metal base material 28 is made of at least one kind of material, and hence may be made of alloy.

As the wavelength plate 22, a 1/2 wavelength plate (1/2λ plate) can be suitably used, and in the configuration diagram of FIG. 1, a circular 1/2 wavelength plate is illustrated as an example of the wavelength plate 22.

Further, the wavelength plate 22 is provided with a rotation controller 26 configured to rotate the circular wavelength plate 22 in a circumferential direction P thereof, and hence the wavelength plate 22 can be rotated in the circumferential direction. Specifically, the fine processing device 10 includes the circular wavelength plate 22 arranged in parallel to the outer circumferential surface 30 of the cylindrical metal base material 28, and the rotation controller 26 configured to rotate the wavelength plate 22 in the circumferential direction P. With this, the laser light can be polarized in various directions. Therefore, when a seamless circulating nano-periodic structure is formed on the outer circumferential surface of the cylindrical metal base material, various nano-periodic structures can be formed. As the wavelength plate 22 and the rotation controller 26, a known 1/2 wavelength plate provided with a rotation controller can be used, for example.

In the present invention, through irradiation of a picosecond laser to a femtosecond laser with a low fluence, a nano-periodic structure serves as a diffraction grating, and an iridescent optical interference color like a hologram can be exhibited. Herein, the term "seamless" means that there is no joint between patterns.

In the nano-periodic structure, a fine groove is formed in a direction perpendicular to a plane of linearly polarized laser light. In order to change a direction of the groove in the nano-periodic structure, the direction can be changed by changing a wave front of polarization. When a roll surface is processed a plurality of times while the angle of a (1/2)λ wavelength plate arranged in an optical system is changed, an embossing roll, which is a transfer molding roll in which a groove in each direction is arranged, can be manufactured.

FIG. 2 is views for illustrating pattern production examples in which directions of grooves in nano-periodic structures based on polarization directions are different.

A pattern 34a of (a) of FIG. 2 is a pattern produced based on only a polarization direction of a direction indicated by the arrow in (a) of FIG. 2 (only a first polarization direction). A pattern of (b) of FIG. 2 is a pattern in which a pattern 34b produced based on a polarization direction of a direction indicated by the arrow in (b) of FIG. 2 is formed in addition to the pattern 34a based on the polarization direction of the direction indicated by the arrow in (a) of FIG. 2 (first polarization direction + second polarization direction). A pattern of (c) of FIG. 2 is a pattern in which a pattern 34c produced based on a polarization direction of a direction indicated by the arrow in (c) of FIG. 2 is formed in addition to the pattern 34a based on the polarization direction of the direction indicated by the arrow in (a) of FIG. 2 and the pattern 34b produced based on the polarization direction of the direction indicated by the arrow in (b) of FIG. 2 (first polarization direction + second polarization direction + third polarization direction).

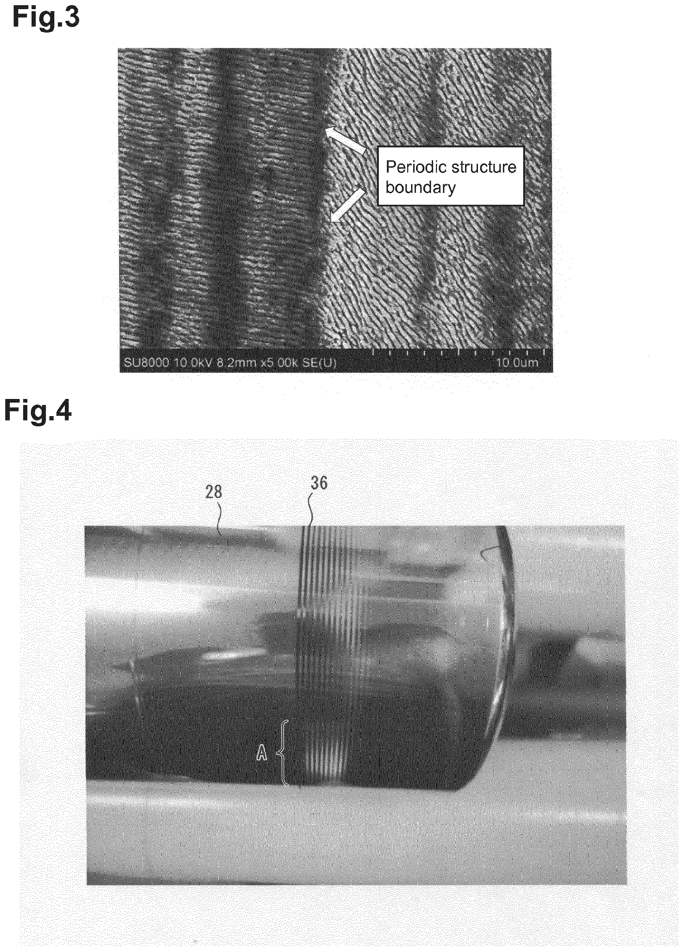

Further, for example, the pattern 34a of (a) of FIG. 2 and the pattern 34b of (b) of FIG. 2 have different groove directions, and hence a boundary of a nano-periodic structure is formed. In FIG. 3, there is shown a photograph taken by an electron microscope (SEM) for showing a boundary of a nano-periodic structure in the case where different kinds of nano-periodic structures having different polarization directions are combined (scale bar: 10 µm, one scale: 1,000 nm). A portion indicated by the arrows of FIG. 3 corresponds to a periodic structure boundary.

### Examples

Now, the present invention is described in more detail with Examples, but needless to say, Examples are only illustrative and not intended to be interpreted in a limited way.

### (Example 1)

A transfer molding roll having a fine periodic structure described below was manufactured through use of a laser of a femtosecond pulse.

An outer circumferential surface of a cylindrical metal base material was irradiated with a femtosecond laser through use of the fine processing device illustrated in the configuration diagram of FIG. 1. As the cylindrical metal base material, a hollow roll having a diameter of 140 mm, which was obtained by subjecting the surface of an aluminum roll to copper plating, was prepared and used.

As a femtosecond laser oscillator, Satsuma HP² manufactured by Amplitude Systems was used. Laser light having a wavelength of 515 nm, an irradiation energy of 0.21 J/cm², a pulse width of 400 fsec, and a repetition frequency of 1 MHz was radiated to a roll surface while both ends of the roll having a diameter of 140 mm with the surface being plated with copper were held by rotatable chuck cones, and the roll was rotated by 28 turns per minute, to thereby form a seamless circulating nano-periodic structure having no joint. Thus, a transfer molding roll having a fine periodic structure was manufactured.

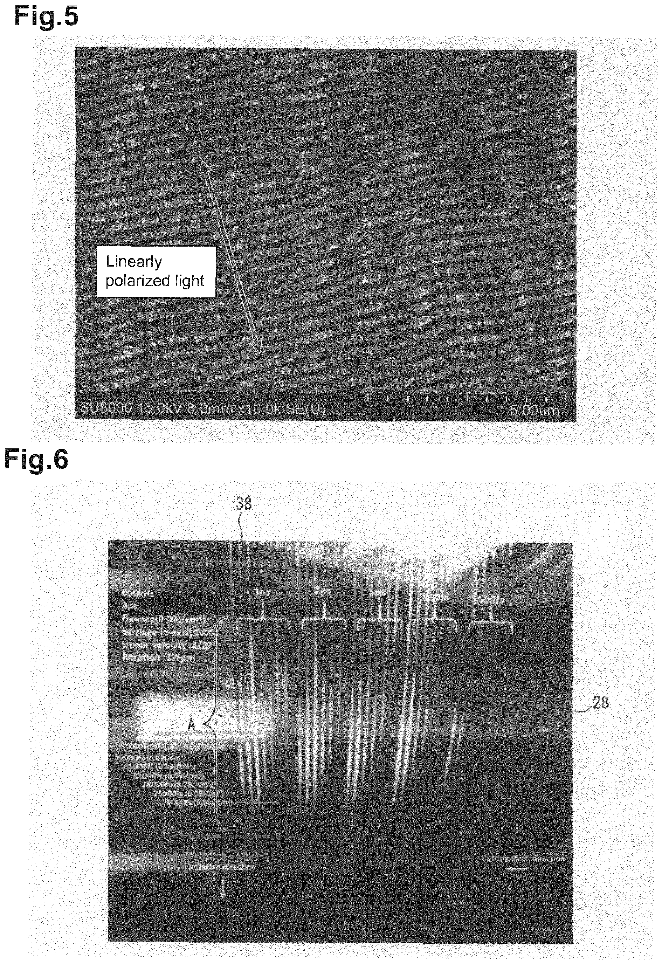

FIG. 4 is a photograph for showing an outer appearance of the transfer molding roll having the fine periodic structure formed on the surface thereof. From the outer appearance of the processed transfer molding roll, a seamless and continuous circulating pattern 36 was able to be processed, and it was able to be observed that an iridescent optical interference color was exhibited. In FIG. 4, a portion in which the iridescent optical interference color was observed is indicated by a symbol "A". In a photograph taken by an electron microscope (SEM) shown in FIG. 5, it was able to be confirmed that a structure in units of nanometers was formed on the surface of the transfer molding roll (scale bar: 5 µm, one scale: 500 nm). Further, through use of the transfer molding roll thus manufactured, a hologram was able to be embossed on an elongated PET film seamlessly and continuously.

### (Example 2)

Next, a transfer molding roll having a fine periodic structure described below was manufactured through use of a laser of a picosecond pulse.

An outer circumferential surface of a cylindrical metal base material was irradiated with a picosecond laser through use of the fine processing device illustrated in the configuration diagram of FIG. 1. As the cylindrical metal base material, a hollow roll having a diameter of 140 mm, which was obtained by subjecting the surface of an aluminum roll to chrome plating, was prepared and used.

As a picosecond laser oscillator, Pharos-20 W-1 MHz manufactured by Light Conversion Ltd. was used. Laser light having a wavelength of 515 nm, an irradiation energy of 0.09 J/cm², a pulse width variable from 400 fsec to 3 psec, and a repetition frequency of 600 kHz was radiated to a roll surface while both ends of the roll having a diameter of 140 mm with the surface being plated with chrome were held by rotatable chuck cones, and the roll was rotated by 17 turns per minute, to thereby form a seamless circulating nano-periodic structure having no joint. Thus, a transfer molding roll having a fine periodic structure was manufactured.

FIG. 6 is a photograph for showing an outer appearance of the transfer molding roll having the fine periodic structure formed on the surface thereof. From the outer appearance of the processed transfer molding roll, a seamless and continuous circulating pattern 38 was able to be processed, and it was able to be observed that an iridescent optical interference color was exhibited. In FIG. 6, a portion in which the iridescent optical interference color was observed is indicated by a symbol "A". Even with a pulse width within the range of from 400 fs to 3 ps, an interference color was observed, and a nano-periodic structure was able to be confirmed. Further, through use of the transfer molding roll thus manufactured, a hologram was able to be embossed on an elongated PET film seamlessly and continuously.

### Reference Signs List

10: fine processing device, 12: ultrashort pulse laser oscillator, 14: optical wavelength converter, 16: optical attenuator, 18: first mirror, 20: second mirror, 22: wavelength plate, 24: objective lens, 26: rotation controller, 28: cylindrical metal base material, 30: outer circumferential surface of cylindrical metal base material, 32: ultrashort pulse laser, 34a, 34b, 34c: pattern production examples of seamless circulating pattern, 36: seamless circulating pattern of Example 1, 38: seamless circulating pattern of Example 2, O: rotation axis, P: circumferential direction, A: portion in which iridescent optical interference color was observed.

## Claims

1. A method of manufacturing a transfer molding roll having a fine periodic structure, the method comprising:
preparing a cylindrical metal base material;
irradiating an outer circumferential surface of the cylindrical metal base material with an ultrashort pulse laser; and
forming a seamless circulating nano-periodic structure on the outer circumferential surface of the cylindrical metal base material through irradiation of the ultrashort pulse laser to form a seamless circulating pattern configured to generate an optical interference color with the seamless circulating nano-periodic structure.

2. A method of manufacturing a transfer molding roll having a fine periodic structure according to claim 1, wherein the ultrashort pulse laser includes a femtosecond laser or a picosecond laser.

3. A method of manufacturing a transfer molding roll having a fine periodic structure according to claim 1 or 2,
wherein the cylindrical metal base material has a rotation axis in a longitudinal direction of the cylindrical metal base material, and
wherein the outer circumferential surface of the cylindrical metal base material is irradiated with the ultrashort pulse laser while the cylindrical metal base material is rotated about the rotation axis.

4. A method of manufacturing a transfer molding roll having a fine periodic structure according to any one of claims 1 to 3, wherein the ultrashort pulse laser is emitted from a fine processing device including: a circular wavelength plate arranged in parallel to the outer circumferential surface of the cylindrical metal base material; and a rotation controller configured to rotate the circular wavelength plate in a circumferential direction of the circular wavelength plate.

5. A transfer molding roll having a fine periodic structure, the transfer molding roll comprising a seamless circulating pattern configured to generate an optical interference color with a seamless circulating nano-periodic structure formed on an outer circumferential surface of a cylindrical metal base material.
